# FASCICULE DE BREVET EUROPEEN

(11) **EP 3 820 672 B1**
(45) Date de publication et mention de la délivrance du brevet: **27.04.2022**
(21) Numéro de dépôt: 19745717.9
(22) Date de dépôt: 04.07.2019
(51) Int. Cl.: B29C 49/42, B08B 1/02, B65G 47/84, B08B 1/00

(54) **DISPOSITIF DE TRANSFERT DE CORPS CREUX EQUIPE D'UN OUTIL DE NETTOYAGE**
VORRICHTUNG ZUM ÜBERFÜHREN VON HOHLKÖRPERN MIT EINEM REINIGUNGSWERKZEUG
DEVICE FOR TRANSFERRING HOLLOW BODIES, EQUIPPED WITH A CLEANING TOOL

(30) Priorité: 11.07.2018 FR 1856361
(43) Date de publication de la demande: 19.05.2021
(73) Titulaire: Sidel Participations, 76930 Octeville-sur-Mer (FR)
(72) Inventeur: MEUNIER, Eric, 76930 Octeville-Sur-Mer (FR); BERTIN, Pascal, 76930 Octeville-Sur-Mer (FR)
(74) Mandataire: Sidel Group
(86) Numéro de dépôt international: PCT/FR2019/051655
(87) Numéro de publication internationale: WO 2020/012095

(56) Documents cités:
- DE-A1-102012 221 804
- DE-U1-202007 006 128

## Description

### DOMAINE TECHNIQUE DE L'INVENTION

L'invention concerne un dispositif de transfert de corps creux comportant :
- une roue de transport montée à rotation autour d'un axe central ;
- des bras de transfert qui sont montés mobiles sur la roue de transport et qui sont équipés d'un organe de préhension de corps creux ;
- au moins une came fixe comportant au moins un chemin de came qui coopère avec des suiveurs de came portés par les bras de transfert pour commander leur position.

### ARRIERE PLAN TECHNIQUE DE L'INVENTION

La fabrication de récipients en matière thermoplastique, tels que des bouteilles, est réalisée à partir de préformes qui sont conditionnées thermiquement, puis moulées par soufflage ou étirage-soufflage.

Dans la suite de la description, le terme "corps creux" pourra s'appliquer aussi bien aux préformes, qu'aux récipients finaux.

Les installations pour la production en série de récipients en matière thermoplastique comportent ainsi au moins un poste de conditionnement thermique formé par un tunnel de chauffage dans lequel défilent les préformes, et au moins un poste de soufflage ou d'étirage/soufflage qui est équipé de moules aptes à recevoir à la chaîne les préformes conditionnées thermiquement.

Les préformes sont en outre transportées d'un poste à l'autre par des moyens de transport. Par exemple, il est connu d'agencer les postes à proximité les uns des autres, et de transporter les préformes d'un poste à l'autre au moyen de roues de transport équipées de moyens de préhension.

Généralement, les moyens de préhension sont commandés au moyen de suiveurs de came qui coopèrent avec des cames.

Au cours du fonctionnement du dispositif de transport, les chemins de came s'encrassent progressivement d'un mélange de graisse et de particules polluantes, telles que des particules de plastique et/ou de métal.

Les chemins de came doivent être régulièrement nettoyés afin d'éviter que la couche de crasse n'endommage les galets. De plus, la présence de cette couche de crasse est susceptible de provoquer des à-coups de vitesse et de position des moyens de préhension.

En outre, le nettoyage doit être effectué de manière assez fréquente pour éviter que la couche de crasse ne s'incruste et soit ainsi trop difficile à nettoyer.

Actuellement, il est connu de nettoyer manuellement les chemins de came. Ce nettoyage hebdomadaire peut immobiliser le dispositif de transport pendant environ une heure.

En outre, le manque d'accessibilité de certaines parties de la came ne permet pas de la nettoyer de manière optimale.

Enfin, cette opération de maintenance est potentiellement dangereuse pour un opérateur humain.

Par ailleurs, dans une remplisseuse notamment aseptique, il est connu d'utiliser des dispositifs de nettoyage au niveau des roues de transferts.

Le document DE102012221804 décrit un dispositif de transfert de récipients ou de préformes comprenant une roue de transport montée en rotation autour d'un axe, des bras de transfert montés mobiles sur la roue de transport équipés d'un organe de préhension pour saisir un récipient ou une préforme. La mobilité du bras de transfert est commandée par un dispositif utilisant une came et des galets. Dans cette invention, la roue de transfert possède un dispositif de nettoyage au niveau de la came. Celle-ci comprend des trous par lesquels passent le produit de nettoyage.

Par ailleurs, le document DE202007006128 décrit un chariot monté sur une porte, et/ou une fenêtre coulissant sur un rail. Ce chariot comprend au moins un galet et un racleur qui entrent en contact avec au moins une surface de roulement du rail. Le racleur permet de nettoyer la surface de roulement pendant le déplacement du chariot.

### BREF RESUME DE L'INVENTION

L'invention propose, en premier lieu, un dispositif de transfert de corps creux comportant :
- une roue de transport montée à rotation autour d'un axe central ;
- des bras de transfert qui sont montés mobiles sur la roue de transport et qui sont équipés d'un organe de préhension de corps creux ;
- au moins une came fixe comportant au moins un chemin de came qui coopère avec des suiveurs de came portés par les bras de transfert pour commander leur position ; où
la roue de transport embarque au moins un outil de nettoyage d'un chemin de came associé, l'outil de nettoyage étant monté mobile et contraint contre le chemin de came avec une force suffisante pour permettre le nettoyage automatique du chemin de came lors de la rotation de la roue de transport.

Selon d'autres caractéristiques de l'invention :
- chaque outil de nettoyage est porté par une glissière fixée sur la roue de transport qui permet un coulissement globalement radial de l'outil de nettoyage par rapport à la roue de transport ;
- l'outil de nettoyage est contraint contre le chemin de came au moyen d'un organe élastique de rappel contre le chemin de came ;
- la glissière est montée sur un emplacement dédié de la roue de transport, entre deux bras de transfert adjacents ;
- la glissière est fixée de manière démontable à la place d'un bras de transfert ;
- l'outil de nettoyage est porté par un bras ;
- le dispositif comprend plusieurs outils de nettoyage portés par une même glissière ;
- chaque outil de nettoyage est porté de manière démontable par la glissière de manière à pouvoir être remplacé à volonté ;
- l'outil de nettoyage comporte une lame de grattoir, notamment une lame en caoutchouc ou une lame en acier ou une lame en céramique ;
- l'outil de nettoyage comporte une éponge susceptible d'être imbibée d'un produit nettoyant.

L'invention propose, en deuxième lieu, un dispositif de transfert de corps creux comportant :
- une roue de transport montée à rotation autour d'un axe (X) central ;
- des bras de transfert qui sont montés mobiles sur la roue de transport et qui sont équipés d'un organe de préhension de corps creux ;
- au moins une came fixe comportant au moins un chemin de came qui coopère avec des suiveurs de came portés par les bras de transfert pour commander leur position ;
caractérisé en ce que la roue de transport embarque au moins un outil de nettoyage d'un chemin de came associé, l'outil de nettoyage étant monté mobile et contraint contre le chemin de came avec une force suffisante pour permettre le nettoyage automatique du chemin de came lors de la rotation de la roue de transport et en ce que l'outil de nettoyage est porté par une glissière fixée sur la roue de transport qui permet un coulissement globalement radial de l'outil de nettoyage par rapport à la roue de transport.

Selon d'autres caractéristiques de l'invention :
- l'outil de nettoyage est contraint contre le chemin de came au moyen d'un organe élastique de rappel contre le chemin de came ;
- la glissière est montée sur un emplacement dédié de la roue de transport, entre deux bras de transfert adjacents ;
- la glissière est fixée de manière démontable à la place d'un bras de transfert ;
- l'outil de nettoyage est porté par un bras ;
- le dispositif comprend plusieurs outils de nettoyage portés par une même glissière ;
- chaque outil de nettoyage est porté de manière démontable par la glissière de manière à pouvoir être remplacé à volonté ;
- l'outil de nettoyage comporte une lame de grattoir, notamment une lame en caoutchouc ou une lame en acier ou une lame en céramique ;
- l'outil de nettoyage comporte une éponge susceptible d'être imbibée d'un produit nettoyant.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective qui représente un dispositif de transfert comportant une roue de transport équipée d'un bras de transfert ;
- la figure 2 est une vue en perspective du bras de transfert équipant le dispositif de transfert de la figure 1 ;
- la figure 3 est une vue en perspective à plus grande échelle du dispositif de transfert de la figure 1 équipé d'outils de nettoyage réalisés selon les enseignements de l'invention ;
- la figure 4 est une vue similaire à celle de la figure 3 vue sous un angle opposé dans laquelle la roue de transport n'a pas été représentée pour permettre de voir les outils de nettoyage contre les chemins de came associés.

### DESCRIPTION DETAILLEE DES FIGURES

Dans la suite de la description, des éléments ayant une fonction identique, analogue ou similaire seront désignés par des mêmes numéros de référence.

Dans la suite de la description, on adoptera à titre non limitatif des orientations
- axiale "A", parallèle à l'axe de rotation de la roue de transport, et
- radiales "R" s'étendant perpendiculairement depuis l'axe de rotation de la roue de transport.

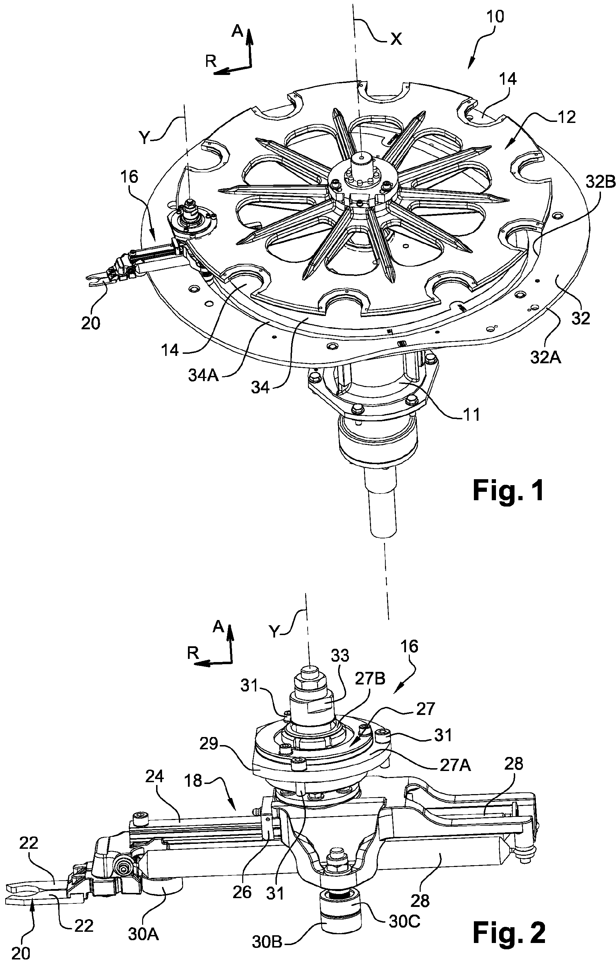

On a représenté à la figure 1 un dispositif 10 de transfert de corps creux (non représentés) réalisés en matériau thermoplastique. Ce dispositif 10 de transfert équipe une installation pour la production en grande série de récipients en matériau thermoplastique, notamment en polyéthylène téréphtalate (PET). Dans une telle installation, les récipients finaux sont formés par soufflage d'une préforme en matériau thermoplastique.

Une telle installation comporte classiquement un four de conditionnement thermique (non représenté) dans lequel défilent les préformes, des moyens d'alimentation (non représentés) du four en préformes, une station (non représentée) de soufflage ou d'étirage-soufflage des préformes ainsi conditionnées thermiquement, et le dispositif 10 de transfert des préformes conditionnées thermiquement jusqu'à la station de soufflage.

Le dispositif 10 de transfert représenté à la figure 1 est ici agencé de manière à transporter les préformes depuis le four de conditionnement jusqu'à la station de soufflage.

Selon une variante non représentée, le dispositif de transfert est bien entendu susceptible d'être agencé à d'autres endroits de l'installation pour la production de récipients.

Le dispositif 10 de transfert comporte ici une base 11 fixe sur laquelle est montée une roue 12 de transport horizontale rotative autour d'un axe "X" de rotation d'orientation axiale. Des encoches 14 sont réparties régulièrement en périphérie de la roue 12 de transport.

Chaque encoche 14 forme un emplacement dans lequel est fixé un moyen 16 de préhension d'une préforme. Dans l'exemple représenté à la figure 1, un seul moyen 16 de préhension a été représenté pour des raisons de clarté.

Comme cela est représenté plus en détails à la figure 2, chaque moyen 16 de préhension comporte plus particulièrement un bras 18 de transfert radial orientable. Le bras 18 est montée à la périphérie de la roue 12 de transport de manière pivotante autour d'un axe "Y" vertical.

Une extrémité extérieure libre du bras 18 est équipée d'un organe 20 de préhension du corps creux, il s'agit ici d'une pince pour saisir une préforme par son col.

Comme représenté plus en détail à la figure 2, la pince 20 est constituée de deux mors 22 qui sont montés pivotants autour de deux axes d'orientation axiale entre une position écartée permettant de recevoir un col de préforme et une position fermée dans laquelle le col de la préforme est serré. La pince 20 est rappelée élastiquement vers sa position fermée au moyen d'un ressort (non représentés).

En variante non représentée de l'invention, un seul des deux mors de la pince est monté rotatif autour d'un axe.

Selon une autre variante non représentée de l'invention, les deux mors sont montés rotatifs autour d'un axe commun.

La pince 20 est ici susceptible de coulisser selon l'axe radial du bras 18 entre une position escamotée radialement vers l'intérieur et une position étendue radialement vers l'extérieur. A cet effet, la pince 20 est montée sur un rail 24 coulissant reçu coulissant radialement dans un guide 26 pivotant.

Le guide 26 pivotant est lui-même monté pivotant autour de l'axe "Y" sur la roue 12 de transport, comme cela est illustré à la figure 1 par l'intermédiaire d'un palier 27 de roulement dont une partie 27A fixe est fixée à la roue 12 de transport et dont une partie 27B pivotante porte le guide 26 pivotant par l'intermédiaire d'un axe 33 de pivot. La partie 27A fixe présente une collerette 29 qui repose sur le pourtour de l'encoche 14 associée et qui est fixée à la roue 12 de transport par exemple par l'intermédiaire de vis 31.

Le palier 27 de roulement est situé au-dessus de la roue 12 de transport, tandis que le guide 26 pivotant et le rail 24 coulissant sont situés sous la roue 12 de transport, l'axe 33 de pivot passant à travers l'encoche 14.

La pince 20 est rappelée vers sa position escamotée par deux ressorts 28 de rappel qui sont agencés parallèlement. Une première extrémité extérieure de chaque ressort 28 est attachée à la pince 20 tandis qu'une deuxième extrémité intérieure de chaque ressort 28 est attachée au guide 26 pivotant.

Le moyen 16 de préhension est ainsi susceptible d'être déplacé par rotation de la roue 12 de transport le long d'une trajectoire circulaire autour de l'axe "X".

Pour que la pince 20 de chaque moyen 16 de préhension puisse saisir ou décharger une préforme de manière synchronisée avec des moyens de transport amont et aval, il est prévu des moyens pour commander la position longitudinale du bras 18 et pour commander le pivotement du bras 18 autour de son axe "B". Ces moyens commandés permettent notamment de modifier l'écart entre deux préformes entre leur entrée et leur sortie du dispositif 10 de transfert.

Pour ce faire, le moyen 16 de préhension comporte au moins un suiveur de came. Comme représenté à la figure 2, le moyen 16 de préhension est ici équipé d'un premier suiveur 30A de came, d'un deuxième suiveur 30B de came et d'un troisième suiveur 30C de came.

Le premier suiveur 30A de came est ici porté sur un tronçon d'extrémité extérieur du rail 24 coulissant. Le premier suiveur 30A de came est plus particulièrement agencé à proximité de la pince 20.

Le deuxième suiveur 30B de came est ici porté par le guide 26 pivotant, légèrement désaxé par rapport à l'axe "Y" de pivotement du bras. Le troisième suiveur 30C de came est monté coaxialement au deuxième suiveur 30B de came, juste au-dessus du deuxième suiveur 30B de came. Le deuxième suiveur 30B de came et le deuxième suiveur 30C de came sont ainsi superposés.

Chaque suiveur 30A, 30B, 30C de came est formé d'un galet roulant autour d'un axe d'orientation axiale. Le premier et le troisième suiveurs 30A, 30C de came sont ici agencés verticalement à la même hauteur.

Le premier et le troisième suiveurs 30A, 30C de came sont destinés à coopérer avec au moins une première came 32 fixe de commande des moyens 16 de préhension. La première came 32 est agencée le long d'au moins un tronçon de la trajectoire du moyen 16 de préhension

Comme représenté à la figure 1, la première came 32 est ici formée par un anneau qui s'étend sous la roue 12 de transport et tout le long du trajet circulaire des moyens 16 de préhension. La première came 32 est fixée sur la base 11 qui est elle-même fixée au châssis.

La première came 32 est réalisée en un matériau robuste qui est par exemple réalisée en un métal, tel que de l'acier.

La première came 32 comporte ici un premier chemin 32A de came et un deuxième chemin 32B de came qui sont respectivement destinés à coopérer avec le premier suiveur 30A de came et avec le deuxième suiveur 30B de came. Le premier chemin 32A de came, dit chemin 32A de came extérieur, est formé par la tranche verticale extérieure de la première came 32, tandis que le deuxième chemin 32B de came, dit chemin de came 32B intérieur, est formé par la tranche verticale intérieure de la première came 32.

La conformation des chemins 32A, 32B de came permet ainsi de commander à la fois la position longitudinale de la pince 20 par rapport au guide 26 pivotant et la position angulaire du bras 18 autour de son axe "Y" de pivotement.

Le dispositif 10 de transfert comporte en outre une deuxième came 34 qui est agencée concentriquement à l'intérieur de la première came 32. La deuxième came 34 comporte un chemin de came 34A formé par sa tranche périphérique extérieure. Le chemin de came 34A de la deuxième came 34 est agencé parallèlement et au-dessous du deuxième chemin 32B de came de la première came 32. Le chemin de came 34A de la deuxième came 34 est destiné à coopérer avec le deuxième suiveur 30B de came. Ainsi, les deux chemins 32B, 34A de cames délimitent une rainure dans laquelle le deuxième et le troisième suiveur 30B, 30C de came sont reçus pour permettre de commander le pivotement du bras 18 autour de l'axe "Y" dans les deux sens de pivotement.

On a constaté qu'à l'usage, les chemins 32A, 32B, 34A de came s'encrassaient progressivement sous l'effet de projection de graisse de lubrification à laquelle viennent se mélanger des particules polluantes, telles que des particules de plastique ou de métal. Cette couche de crasse peut avoir un effet abrasif sur les suiveurs 30A, 30B, 30C de came et entraîner ainsi leur usure prématurée.

Pour permettre un nettoyage rapide et peu onéreux des chemins 32A, 32B, 34A de came, l'invention propose que la roue 12 de transport embarque au moins un outil 36A, 36B, 36C de nettoyage par frottement d'un chemin 32A, 32B, 34A de came associé. L'outil 36A, 36B, 36C est monté mobile et contraint contre le chemin 32A, 32B, 34A de came associé avec une force suffisante pour permettre le nettoyage automatique par contact, par exemple par frottement, contre le chemin 32A, 32B, 34A de came lors de la rotation de la roue 12 de transport.

Dans le mode de réalisation représenté aux figures, le dispositif 10 de transfert comporte trois chemins 32A, 32B, 34A de came. L'invention propose d'agencer trois outils 36A, 36B, 36C de nettoyage dont chacun est associé à chaque chemin 32A, 32B, 34A de came.

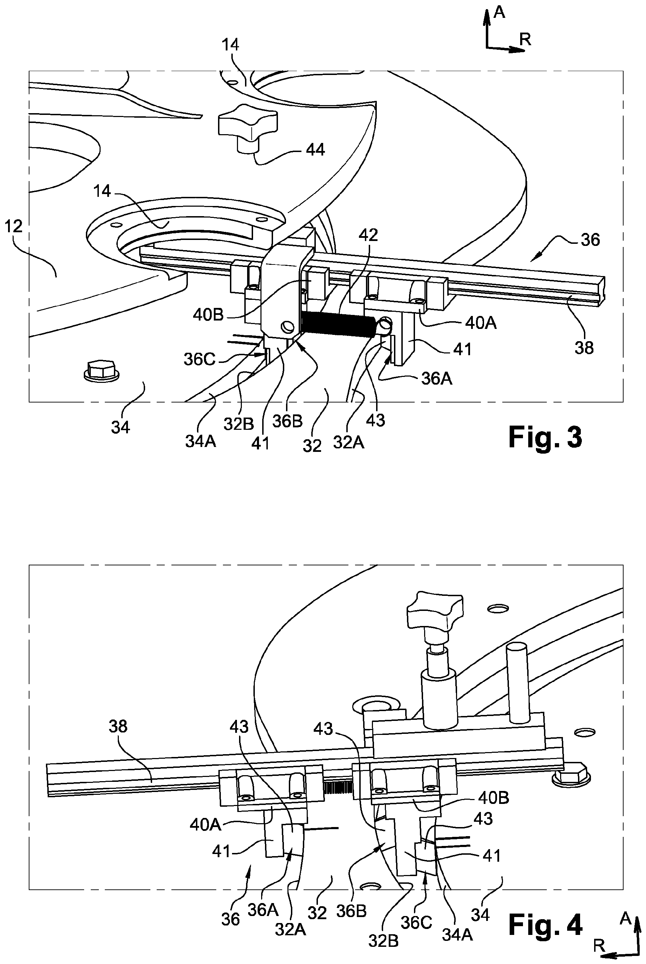

Chaque outil 36A, 36B, 36C est porté par une glissière 38 qui est fixée sur la roue 12 de transport. La glissière 38 s'étend globalement radialement par rapport à la roue 12 de transport. Dans le mode de réalisation représenté aux figures 3 et 4, les trois outils 36A, 36B, 36C sont portés par une glissière 38 commune.

En variante non représentée de l'invention, les outils de nettoyage sont portés par des glissières distinctes.

Chaque outil 36A, 36B, 36C de nettoyage est monté sur un chariot 40A, 40B qui est monté coulissant radialement sur la glissière 38. Ainsi chaque outil 36A, 36B, 36C de nettoyage est monté coulissant globalement radialement par rapport à la roue 12 de transport.

Dans le mode de réalisation représenté aux figures 3 et 4, l'outil 36A de nettoyage du premier chemin 32A de came extérieur de la première came 32 est porté par un premier chariot 40A associé, tandis que les outils 36B, 36C de nettoyage des chemins 32B, 34A de came qui délimitent la rainure sont tous les deux portés par un même deuxième chariot 40B. Le deuxième chariot 40B est ici reçu dans la rainure délimitée par les deux chemins 32B, 34A de came.

Chaque outil 36A, 36B, 36C de nettoyage est porté de manière démontable par la glissière 38 de manière à pouvoir être remplacé à volonté.

Par exemple, il est possible de remplacer l'outil 36A, 36B, 36C en remplaçant la totalité du chariot 40A, 40B associé.

Selon un autre exemple, chaque outil 36A, 36B, 36C est porté de manière démontable par le chariot 40A, 40B associé. Il est ainsi possible de remplacer uniquement l'outil 36A, 36B, 36C de nettoyage sur le chariot 40A, 40B associé sans démonté le chariot 40A, 40B de la glissière 38.

L'outil 36A, 36B, 36C de nettoyage comporte un support 41 qui porte une pièce de frottement, par exemple une lame 43 de grattoir qui est destinée à racler le chemin 32A, 32B, 34A de came associé pendant la rotation de la roue 12 de transport. La lame 43 de grattoir est par exemple réalisée en caoutchouc.

En variante non représentée de l'invention, la lame 43 de grattoir est réalisée en métal, par exemple en acier, ou encore en céramique. Dans ce cas, le matériau est sélectionné de manière à présenter une dureté inférieure à celle du chemin de came associé pour éviter que le frottement de la lame 43 de grattoir n'endommage le chemin de came, par exemple en produisant des rayures ou en enlevant des copeaux de matière.

En variante non représentée de l'invention, l'outil de nettoyage peut aussi comporter une éponge susceptible d'être imbibée d'un produit nettoyant. L'éponge est par exemple alimentée en produit nettoyant par un tuyau relié à un réservoir. Le réservoir est par exemple embarqué sur la glissière.

L'outil 36A de nettoyage associé au chemin 32A de came extérieur est contraint contre le chemin 32A de came extérieur au moyen d'un organe 42 élastique de rappel contre ledit chemin 32A de came.

Dans le mode de réalisation représenté aux figures 3 et 4, le deuxième chariot 40B est reçu contraint radialement dans la rainure par appui élastique simultané des deux lames 43 de grattoir associées contre chaque chemin 32B, 34A de came. En d'autres termes, chaque lame 43 monté sur le deuxième chariot 40B pousse l'autre lame 43 contre le chemin 32B, 34A de came associé.

L'organe 42 élastique est ici formé par un ressort hélicoïdal dont une première extrémité est fixée au premier chariot 40A tandis que l'autre extrémité est fixée au deuxième chariot 40B.

La glissière 38 est ici montée sur un emplacement dédié de la roue 12 de transport, entre deux bras 18 de transfert. La glissière 38 est ici fixée entre deux encoches 14, à la faveur d'un orifice 44 de fixation. La glissière 38 s'étend sous la roue 12 de transport.

La glissière 38 est par exemple montée sur la roue 12 de transport pendant une opération de maintenance du dispositif 10 de transfert, puis elle est démontée lorsque le dispositif 10 de transfert est en cours d'utilisation pour le transport de corps creux.

Lorsque la glissière 38 est susceptible d'interférer avec les déplacements d'un des bras 18 de transfert adjacents, ledit bras 18 de transfert est démonté.

En variante, non représentée de l'invention, la glissière 38 est fixée de manière démontable dans une encoche 14 en remplacement d'un bras 18 de transfert.

Selon une variante particulièrement avantageuse, la glissière 38 est montée sur la roue 12 de transport de manière à n'interférer ni avec les bras 18 de transfert, ni avec les corps creux transportés durant une révolution de la roue 12 de transport. Ainsi, il est possible de laisser les outils 36A, 36B, 36C de nettoyage monté sur la roue 12 de transport pendant l'utilisation du dispositif 10 de transfert pour transporter des corps creux. Ainsi, les chemins 32A, 32B, 34A de came sont nettoyés en permanence.

Selon une autre variante non représentée de l'invention, l'outil de nettoyage est monté directement sur un bras. Dans ce cas, l'outil de nettoyage qui est destiné à nettoyer un chemin de came déterminé est porté par le même élément que le suiveur de came associé, par exemple le rail coulissant ou le guide pivotant. L'outil de nettoyage est par exemple agencé en amont ou en aval du suiveur de came associé selon le sens de déplacement du suiveur de came sur le chemin de came.

L'invention permet avantageusement d'automatiser l'opération de nettoyage des chemins de came en installant un outil de nettoyage embarqué sur la roue 12 de transport. Le nettoyage est ainsi réalisé automatiquement par mise en rotation de la roue 12 de transport.

Cela permet de diminuer le temps nécessaire au nettoyage des chemins de came.

En outre, cela permet de nettoyer parfaitement entièrement chaque chemin de came, même lorsque certaines portions sont peu accessibles à un opérateur humain.

Tous ces avantages sont obtenus au moyen d'un dispositif de nettoyage simple et peu coûteux à fabriquer.

## Revendications

1. Dispositif (10) de transfert de corps creux comportant :
- une roue (12) de transport montée à rotation autour d'un axe (X) central ;
- des bras (18) de transfert qui sont montés mobiles sur la roue (12) de transport et qui sont équipés d'un organe (20) de préhension de corps creux ;
- au moins une came (32, 34) fixe comportant au moins un chemin (32A, 32B, 34A) de came qui coopère avec des suiveurs (30A, 30B, 30C) de came portés par les bras (18) de transfert pour commander leur position ;
où la roue (12) de transport embarque au moins un outil (36A, 36B, 36C) de nettoyage d'un chemin (32A, 32B, 34A) de came associé,
**caractérisé en ce que** l'outil (36A, 36B, 36C) de nettoyage étant monté mobile et contraint contre le chemin (32A, 32B, 34A) de came avec une force suffisante pour permettre le nettoyage automatique du chemin (32A, 32B, 34A) de came lors de la rotation de la roue (12) de transport et **en ce que** l'outil (36A, 36B, 36C) de nettoyage est porté par une glissière (38) fixée sur la roue (12) de transport qui permet un coulissement globalement radial de l'outil (36A, 36B, 36C) de nettoyage par rapport à la roue (12) de transport.

2. Dispositif (10) selon la revendication précédente, **caractérisé en ce que** l'outil (36A) de nettoyage est contraint contre le chemin (32A) de came au moyen d'un organe (42) élastique de rappel contre le chemin (32A) de came.

3. Dispositif (10) selon l'une quelconque des revendications 1 à 2, **caractérisé en ce que** la glissière (38) est montée sur un emplacement dédié de la roue (12) de transport, entre deux bras (18) de transfert adjacents.

4. Dispositif (10) selon l'une quelconque des revendications 1 à 2, **caractérisé en ce que** la glissière (38) est fixée de manière démontable à la place d'un bras (18) de transfert.

5. Dispositif (10) selon l'une quelconque des revendications 1 à 2, **caractérisé en ce que** l'outil (36) de nettoyage est porté par un bras (18).

6. Dispositif (10) selon la revendication précédente, **caractérisé en ce qu'**il comprend plusieursoutils (36A, 36B, 36C) de nettoyage portés par une même glissière (38).

7. Dispositif (10) selon l'une quelconque des revendications précédentes, **caractérisé en ce que** chaque outil (36A, 36B, 36C) de nettoyage est porté de manière démontable par la glissière (38) de manière à pouvoir être remplacé à volonté.

8. Dispositif (10) selon l'une quelconque des revendications précédentes, **caractérisé en ce que** l'outil (36A, 36B, 36C) de nettoyage comporte une lame (43) de grattoir, notamment une lame en caoutchouc ou une lame en acier ou une lame en céramique.

9. Dispositif (10) selon l'une quelconque des revendications précédentes, **caractérisé en ce que** l'outil (36A, 36B, 36C) de nettoyage comporte une éponge susceptible d'être imbibée d'un produit nettoyant.

## Patentansprüche

1. Vorrichtung (10) zur Übergabe von Hohlkörpern aufweisend:
- ein Transportrad (12), das um eine Mittelachse (X) drehbar gelagert ist;
- Übergabearme (18), die auf dem Transportrad (12) beweglich gelagert und mit einem Hohlkörper-Greiforgan (20) ausgerüstet sind;
- wenigstens einen festen Nocken (32, 34), der wenigstens eine Nockenbahn (32A, 32B, 34A) aufweist, die mit Nockenstößeln (30A, 30B, 30C) zusammenwirkt, die von den Übergabearmen (18) getragen werden, um deren Position zu steuern;
wobei das Transportrad (12) wenigstens ein Werkzeug (36A, 36B, 36C) zur Reinigung einer zugehörigen Nockenbahn (32A, 32B, 34A) aufweist,
**dadurch gekennzeichnet, dass** das Reinigungswerkzeug (36A, 36B, 36C) beweglich gelagert ist und mit einer Kraft gegen die Nockenbahn (32A, 32B, 34A) gespannt ist, die ausreicht, um die automatische Reinigung der Nockenbahn (32A, 32B, 34A) bei der Drehung des Transportrads (12) zu gestatten, und dadurch, dass das Reinigungswerkzeug (36A, 36B, 36C) von einer Führungsschiene (38) getragen wird, die am Transportrad (12) befestigt ist, die eine insgesamt radiale Verschiebung des Reinigungswerkzeugs (36A, 36B, 36C) bezogen auf das Transportrad (12) gestattet.

2. Vorrichtung (10) nach dem vorhergehenden Anspruch, **dadurch gekennzeichnet, dass** das Reinigungswerkzeug (36A) mittels eines elastischen Organs (42) zur Rückholung gegen die Nockenbahn (32A) gegen die Nockenbahn (32A) gespannt ist.

3. Vorrichtung (10) nach einem der Ansprüche 1 bis 2, **dadurch gekennzeichnet, dass** die Führungsschiene (38) an einer dedizierten Stelle des Transportrads (12) zwischen zwei benachbarten Übergabearmen (18) angebracht ist.

4. Vorrichtung (10) nach einem der Ansprüche 1 bis 2, **dadurch gekennzeichnet, dass** die Führungsschiene (38) abnehmbar anstelle eines Übergabesarms (18) befestigt ist.

5. Vorrichtung (10) nach einem der Ansprüche 1 bis 2, **dadurch gekennzeichnet, dass** das Reinigungswerkzeug (36) von einem Arm (18) getragen wird.

6. Vorrichtung (10) nach dem vorhergehenden Anspruch, **dadurch gekennzeichnet, dass** sie mehrere Reinigungswerkzeuge (36A, 36B, 36C) umfasst, die von einer selben Führungsschiene (38) getragen werden.

7. Vorrichtung (10) nach einem der vorhergehenden Ansprüche, **dadurch gekennzeichnet, dass** jedes Reinigungswerkzeug (36A, 36B, 36C) abnehmbar von der Führungsschiene (38) getragen wird, so dass es nach Belieben ausgewechselt werden kann.

8. Vorrichtung (10) nach einem der vorhergehenden Ansprüche, **dadurch gekennzeichnet, dass** das Reinigungswerkzeug (36A, 36B, 36C) ein Schaberblatt (43) aufweist, insbesondere ein Blatt aus Gummi oder ein Blatt aus Stahl oder ein Blatt aus Keramik.

9. Vorrichtung (10) nach einem der vorhergehenden Ansprüche, **dadurch gekennzeichnet, dass** das Reinigungswerkzeug (36A, 36B, 36C) einen Schwamm aufweist, der mit einem Reiniger getränkt werden kann.

## Claims

1. Device (10) for transferring a hollow body, having:
- a transport wheel (12) mounted so as to be able to rotate about a central axis (X);
- transfer arms (18) that are mounted so as to be able to move on the transport wheel (12) and that are fitted with a member (20) for gripping a hollow body;
- at least one static cam (32, 34) having at least one cam path (32A, 32B, 34A) that interacts with cam followers (30A, 30B, 30C) borne by the transfer arms (18) for the purpose of controlling their position;
wherein the transport wheel (12) carries at least one tool (36A, 36B, 36C) for cleaning an associated cam path (32A, 32B, 34A), **characterized in that** the cleaning tool (36A, 36B, 36C) is mounted so as to be movable and under stress against the cam path (32A, 32B, 34A) with sufficient force to enable the automatic cleaning of the cam path (32A, 32B, 34A) as the transport wheel (12) rotates and **in that** the cleaning tool (36A, 36B, 36C) is borne by a slide (38) fastened to the transport wheel (12) that makes it possible for the cleaning tool (36A, 36B, 36C) to slide overall radially in relation to the transport wheel (12).

2. Device (10) according to the preceding claim, **characterized in that** the cleaning tool (36A) is placed under stress against the cam path (32A) by means of an elastic return member (42) returning against the cam path (32A) .

3. Device (10) according to either one of Claims 1 and 2, **characterized in that** the slide (38) is mounted on a dedicated position on the transport wheel (12), between two adjacent transfer arms (18).

4. Device (10) according to either one of Claims 1 and 2, **characterized in that** the slide (38) is fastened removably in place of one transfer arm (18).

5. Device (10) according to either one of Claims 1 and 2, **characterized in that** the cleaning tool (36) is borne by one arm (18).

6. Device (10) according to the preceding claim, **characterized in that** it comprises multiple cleaning tools (36A, 36B, 36C) borne by one and the same slide (38) .

7. Device (10) according to any one of the preceding claims, **characterized in that** each cleaning tool (36A, 36B, 36C) is borne removably by the slide (38) so as to be able to be replaced as required.

8. Device (10) according to any one of the preceding claims, **characterized in that** the cleaning tool (36A, 36B, 36C) has a scraper blade (43), in particular a rubber blade or a steel blade or a ceramic blade.

9. Device (10) according to any one of the preceding claims, **characterized in that** the cleaning tool (36A, 36B, 36C) has a sponge that is able to be impregnated with a cleaning product.
